# EUROPEAN PATENT APPLICATION

(11) **EP 4 765 918 A1**
(43) Date of publication of application: **24.06.2026**
(21) Application number: 23948804.2
(22) Date of filing: 14.08.2023
(51) Int. Cl.: H04W 16/22

(54) **METHOD FOR WIRELESS COMMUNICATION, AND DEVICE**

(71) Applicant: GUANGDONG OPPO MOBILE TELECOMMUNICATIONS CORP., LTD., Dongguan, Guangdong 523860 (CN)
(72) Inventor: SHEN, Jia, Dongguan, Guangdong 523860 (CN); TIAN, Wenqiang, Dongguan, Guangdong 523860 (CN)
(74) Representative: RGTH
(86) International application number: PCT/CN2023/112991
(87) International publication number: WO 2025/035369

(57) **Abstract**

Provided are a method for wireless communication, and a device. The method comprises: if a first condition is satisfied, a terminal device communicating with a network device on the basis of a first model, wherein the first condition comprises the terminal device not being configured or indicated with model information, and/or, a first timer expiring, and the first timer is associated with a time at which the terminal device communicates with the network device on the basis of a second model. In the embodiments of the present application, when a terminal device cannot determine model information that is used, or cannot acquire model information suitable for the current scenario in a timely manner, if a first condition is satisfied, a model (e.g., a first model) that has a better generalization capability and can operate in various deployment scenarios is used to perform communication, thereby facilitating an improvement in the system performance.

## Description

### TECHNICAL FIELD

The present disclosure relates to the technical field of communications, and more particularly, to a method for wireless communication and a device.

### BACKGROUND

Compared with traditional communication technologies, artificial intelligence (Al) model-based communication technologies may bring certain performance gains. However, when a terminal device is unable to obtain model information to be used or fails to obtain model information suitable for a current scenario timely, the performance gains may not be brought and the system performance may even be impacted.

### SUMMARY

The present disclosure provides a method for wireless communication and a device. Various aspects involved in the present disclosure are introduced below.

In a first aspect, a method for wireless communication is provided, which includes: performing, by a terminal device, communication with a network device based on a first model in response to a first condition being met, where the first condition includes that the terminal device is not configured with or not indicated with model information, and/or that a first timer expires, the first timer being associated with a time when the terminal device performs communication with the network device based on a second model.

In a second aspect, a method for wireless communication is provided, which includes: performing, by a network device, communication with a terminal device based on a third model in response to a first condition being met, where the first condition includes that the terminal device is not configured with or not indicated with model information, and/or a that first timer expires; and a first model is associated with the third model, the first model is a model used by the terminal device when the first condition is met, and the first timer is associated with a time when the terminal device performs communication with the network device based on a second model.

In a third aspect, a terminal device is provided, which includes: a communication unit, configured to perform communication with a network device based on a first model in response to a first condition being met, where the first condition includes that the terminal device is not configured with or not indicated with model information, and/or a that first timer expires, the first timer being associated with a time when the terminal device performs communication with the network device based on a second model.

In a fourth aspect, a network device is provided, which includes: a communication unit, configured to perform communication with a terminal device based on a third model in response to a first condition being met, where the first condition includes that the terminal device is not configured with or not indicated with model information, and/or that a first timer expires; and a first model is associated with the third model, the first model is a model used by the terminal device when the first condition is met, and the first timer is associated with a time when the terminal device performs communication with the network device based on a second model.

In a fifth aspect, a terminal device is provided, which includes: a memory and a processor, where the memory is configured to store a program, and the processor is configured to call the program in the memory to enable the terminal device to perform part or all of the steps in the method of the first aspect.

In a sixth aspect, a network device is provided, which includes: a memory and a processor, where the memory is configured to store a program, and the processor is configured to call the program in the memory, to enable the network device to perform part or all of the steps in the method of the second aspect.

In a seventh aspect, a terminal device is provided, which includes: a processor, configured to call a program from a memory, to enable the terminal device to perform part or all of the steps in the method of the first aspect.

In an eighth aspect, a network device is provided, which includes: a processor, configured to call a program from a memory, to enable the network device to perform part or all of the steps in the method of the second aspect.

In a ninth aspect, a chip is provided, which includes: a processor, configured to call a program from a memory, to enable the chip to perform part or all of the steps in the method of the first or second aspect.

In a tenth aspect, a computer-readable storage medium is provided, having a program stored thereon, where the program enables a wireless communication device to perform part or all of the steps in the method of the first or second aspect.

In an eleventh aspect, a computer program product is provided, where the computer program product includes a non-transitory computer-readable storage medium storing a computer program, and the computer program is operable to enable a communication device to perform some or all of the steps in the methods of the above various aspects. In some implementations, the computer program product may be a software installation package.

In a twelfth aspect, a computer program is provided, and the computer program enables a wireless communication device to perform part or all of the steps in the method of the first or second aspect.

In the embodiments of the present disclosure, when the terminal device is unable to determine the model information to be used or fails to obtain the model information suitable for the current scenario timely, for example, when the first condition is met, a model (e.g., the first model) that has good generalization capability and can work in multiple deployment scenarios is used for communication, thereby helping to improve the system performance.

### BRIEF DESCRIPTION OF THE DRAWINGS

FIG. 1 is a wireless communication system to which the embodiments of the present disclosure are applied.
FIG. 2 is a schematic diagram of a neural network to which the embodiments of the present disclosure are applicable.
FIG. 3 is a schematic diagram of a convolutional neural network to which the embodiments of the present disclosure are applicable.
FIG. 4 is an example diagram of the use of an AI or a machine learning (ML) model.
FIG. 5 is a flowchart of a method for wireless communication provided in the embodiments of the present disclosure.
FIG. 6 is an example diagram of use of an initial model (single-sided) provided in the embodiments of the present disclosure.
FIG. 7 is an example diagram of use of an initial model (two-sided) provided in the embodiments of the present disclosure.
FIG. 8 is an example diagram of use of a default model (single-sided) provided in the embodiments of the present disclosure.
FIG. 9 is an example diagram of use of a default model (two-sided) provided in the embodiments of the present disclosure.
FIG. 10 is an example diagram of use of another default model (single-sided) provided in the embodiments of the present disclosure.
FIG. 11 is an example diagram of use of another default model (two-sided) provided in the embodiments of the present disclosure.
FIG. 12 is an example diagram of use of yet another default model (single-sided) provided in the embodiments of the present disclosure.
FIG. 13 is an example diagram of use of yet another default model (two-sided) provided in the embodiments of the present disclosure.
FIG. 14 is an example diagram of use of still another default model (single-sided) provided in the embodiments of the present disclosure.
FIG. 15 is an example diagram of use of still another default model (two-sided) provided in the embodiments of the present disclosure.
FIG. 16 is a schematic structural diagram of a terminal device according to the embodiments of the present disclosure.
FIG. 17 is a schematic structural diagram of a network device according to the embodiments of the present disclosure.
FIG. 18 is a schematic structural diagram of a communication apparatus according to the embodiments of the present disclosure.

### DETAILED DESCRIPTION

The technical solutions of the present disclosure are described below with reference to the drawings.

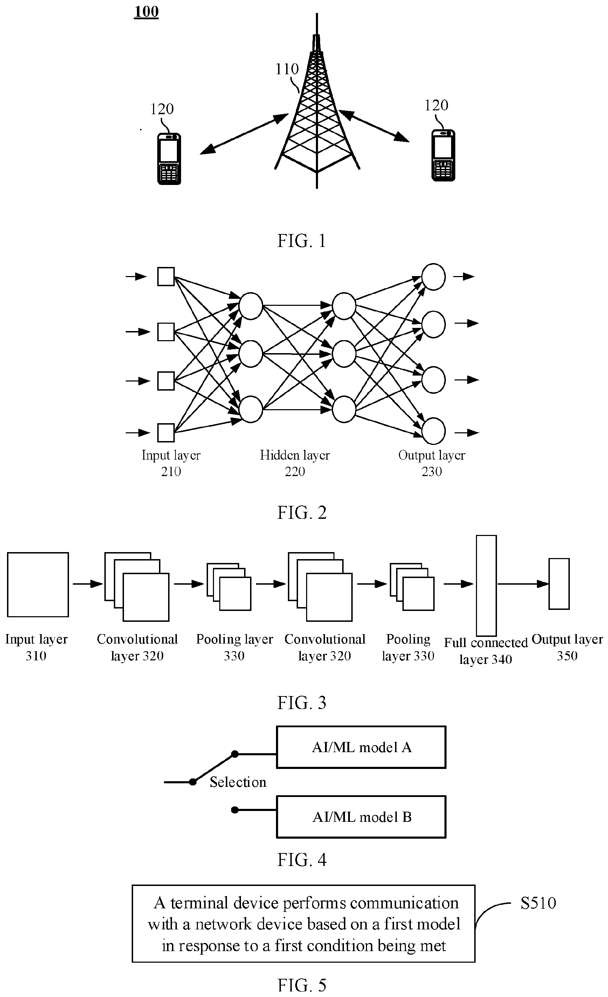

FIG. 1 is a wireless communication system 100 to which the embodiments of the present disclosure are applied. The wireless communication system 100 may include a network device 110 and terminal devices 120. The network device 110 may be a device that communicates with the terminal device 120. The network device 110 may provide communication coverage for a certain geographical area and may communicate with the terminal device 120 located within the coverage area.

FIG. 1 exemplarily illustrates a network device and two terminals. Optionally, the wireless communication system 100 may include multiple network devices and the coverage area of each network device may include other numbers of terminal devices, which is not limited in the embodiments of the present disclosure.

Optionally, the wireless communication system 100 may further include other network entities, such as a network controller and a mobility management entity, which is not limited in the embodiments of the present disclosure.

It should be understood that the technical solutions of the embodiments of the present disclosure may be applied to various communication systems, such as: a 5th generation (5G) system or a new radio (NR) system, a long term evolution (LTE) system, an LTE frequency division duplex (FDD) system, and an LTE time division duplex (TDD) system. The technical solutions provided in the present disclosure may also be applied to future communication systems, such as a 6th generation mobile communication system or a satellite communication system.

The terminal device in the embodiments of the present disclosure may also be referred to as a user equipment (UE), an access terminal, a user unit, a user station, a mobile platform, a mobile station (MS), a mobile terminal (MT), a remote station, a remote terminal, a mobile device, a user terminal, a terminal, a wireless communication device, a user agent or a user apparatus. The terminal device in the embodiments of the present disclosure may refer to a device that provides voice and/or data connectivity to a user and that may be used to connect people, an object and a machine, for example, the terminal device may be a handheld device or a vehicle-mounted device having a wireless connection function. The terminal device in the embodiments of the present disclosure may be a mobile phone, a pad, a laptop computer, a handheld computer, a mobile Internet device (MID), a wearable device, a virtual reality (VR) device, an augmented reality (AR) device, a wireless terminal in industrial control, a wireless terminal in self driving, a wireless terminal in remote medical surgery, a wireless terminal in smart grid, a wireless terminal in transportation safety, a wireless terminal in smart city, a wireless terminal in smart home, or the like. Optionally, the UE may be used to act as a base station. For example, the UE may act as a scheduling entity, providing a sidelink signal between UEs in communication systems such as vehicle-to-everything (V2X) or device-to-device (D2D). For example, a cellular phone and a car communicate with each other by using sidelink signals. A cellular phone and a smart home device communicate with each other without relaying communication signals via a base station.

The network device in the embodiments of the present disclosure may be a device for communicating with the terminal device, and the network device may also be referred to as an access network device or a wireless access network device, for example, the network device may be a base station. The network device in the embodiments of the present disclosure may refer to: a radio access network (RAN) node (or device) that accesses the terminal device to a wireless network; a core network device, a model monitoring management device, or an operation administration and maintenance device. The base station may broadly cover the following various names, or be replaced with the following names, such as: a node B (NodeB), an evolved NodeB (eNB), a next generation NodeB (gNB), a relay station, an access point, a transmitting and receiving point (TRP), a transmitting point (TP), a master station MeNB, a secondary station SeNB, a multi-standard radio (MSR) node, a home base station, a network controller, an access node, a wireless node, an access point (AP), a transmitting node, a transceiver node, a base band unit (BBU), a remote radio unit (RRU), an active antenna unit (AAU), a remote radio head (RRH), a central unit (CU), a distributed unit (DU), a centralized unit-control plane (CU-CP), a centralized unit-user plane (CU-UP), or a positioning node. The core network device may broadly cover the following various names, or be replaced with the following names, such as: a location management function (LMF) network element, network slice selection function (NSSF), authentication server function (AUSF), unified data management (UDM), access and mobility management function (AMF), session management function (SMF), policy control function (PCF), user plane function (UPF), sensing function (SF), or a network data analytics function (NWDAF) network element.

The base station may be a macro base station, a micro base station, a relay node, a donor node or analogues, or a combination thereof. The base station may also refer to a communication module, a modem or a chip for being set within the above device or apparatus. The base station may also be: a mobile switching center; a device that undertakes a base station function in D2D, V2X and machine-to-machine (M2M) communications; a network-side device in a 6G network; a device that undertakes a base station function in future communication systems, or the like. The base station may support networks with the same or different access technologies. The specific technologies used for the network device and the specific device forms of the network device are not limited in the embodiments of the present application. The base station may be fixed or mobile. For example, a helicopter or a drone may be configured to act as a mobile base station, and one or more cells may be moved according to the position of the mobile base station. In other examples, the helicopter or the drone may be configured to act as a device for communicating with another base station.

The base station may be fixed or mobile. For example, a helicopter or a drone may be configured to act as a mobile base station, and one or more cells may be moved according to the position of the mobile base station. In other examples, the helicopter or the drone may be configured to act as a device for communicating with another base station.

In some deployments, the network device in the embodiments of the present disclosure may refer to a CU or a DU; alternatively, the network device includes a CU and a DU. The gNB may also include an AAU.

The network device and the terminal device may be deployed on land, including indoor or outdoor, handheld or in-vehicle; or deployed on water; or deployed on an airplane, a balloon or a satellite in air. The scenarios in which the network device and the terminal device are located are not limited in the embodiments of the present disclosure.

It should be understood that all or part of functions of the communication device in the present disclosure may also be implemented through software functions running on hardware, or implemented through virtualized functions instantiated on a platform (e.g., a cloud platform).

### AI

In recent years, artificial intelligence research represented by neural networks has made great achievements in many fields, and it will also play an important role in people's production and life for a long time to come.

FIG. 2 is a schematic diagram of a neural network to which the embodiments of the present disclosure are applicable. The neural network illustrated in FIG. 2 may be classified into three categories according to position partitions of different layers: input layer 210, hidden layers 220 and output layer 230. Generally, the first layer is the input layer 210, the last layer is the output layer 230, and the intermediate layers between the first layer and the last layer are all hidden layers 220. A sample may be input from the input layer 210, processed by the hidden layers 220, and the final result is generated at the output layer 230. Among them, each node represents a processing unit, which may be considered to simulate one neuron. Multiple neurons constitute a layer of the neural network, and multi-layer information transmission and processing constructs an overall neural network.

With the continuous development of neural network research, neural network deep learning algorithms have been proposed in recent years, in which more hidden layers are introduced. Feature learning is performed through layer by layer training of multi-hidden layer neural network, which greatly improves the learning and processing capabilities of the neural network, and is widely used in terms of pattern recognition, signal processing, combinatorial optimization, abnormality detection or the like.

Similarly, with the development of deep learning, the convolutional neural networks have also been further studied. FIG. 3 is a schematic diagram of a convolutional neural network to which the embodiments of the present disclosure are applicable. The fundamental architecture of the convolutional neural network may include: an input layer 310, multiple convolutional layers 320, multiple pooling layers 330, a fully connected layer 340 and an output layer 350. The introduction of the convolution layers 320 and the pooling layers 330 effectively curbs the sharp growth of network parameters, limits the number of parameters and digs the characteristics of the local structure, thereby improving the robustness of the algorithm.

At present, the industry has commenced research on the AI/ ML model for 5G and 6G air interfaces, and it is believed that for certain functionalities and features of the 5G/6G air interfaces, the AI/ML model-based technical solutions may achieve certain performance gains compared to the traditional non-AI/ML-based technical solutions. Therefore, in the future 5G/6G air interface system, an AI/ML model may be selected to replace the traditional non-AI/ML technical solution for a certain functionality or feature under a suitable application scenario.

The process of using the AI/ML model in the wireless communication system is introduced briefly below with reference to FIG. 4.

First, the terminal device may report its own capabilities. For example, the terminal device may report capability information associated with the operation of the model, such as storage resources, computing resources, and power.

Second, if there is an AI/ML model for a functionality or a feature, the 5G/6G system may be configured based on the capability reporting of the terminal, for example, configuring an AI/ML model set that can be activated (e.g., AI/ML model A and AI/ML model B illustrated in FIG. 4).

Then, the network device may select and activate an AI/ML model from the AI/ML model set, and perform communication based on the AI/ML model. FIG. 4 exemplarily illustrates a schematic diagram of selecting AI/ML model A from AI/ML model A and AI/ML model B included in the AI/ML model set.

For AI/ML models specially optimized for an application scenario, different AI/ML models may be suitable for different deployment scenarios. When detecting that a certain AI/ML model is operating in a poor state, the network device may switch to another AI/ML model through indication information, and this process is referred to as model switching. For example, with the position moving of the terminal, the terminal is handed over from one cell to another cell, and the deployment scenario may change significantly, and the AI/ML model originally used may not be suitable for the new deployment scenario. When detecting the performance degradation, the network device needs to switch to another model suitable for the current deployment scenario. Based on this, the process of using the AI/ML model may further include model monitoring and model switching, or the like.

It can be seen that in the process of using the model (e.g., the AI/ML model), the network device is required to select the model. For example, the network device may indicate the selection of the model by indication information in the connected state, such as radio resource control (RRC) information or downlink control information (DCI). As such, in certain states (e.g., the initial access phase), the network device has not yet entered the RRC connected state and may be unable to indicate the model via the RRC configuration or the DCI. In other words, when the terminal device is not configured with or not indicated with the model information, the model used by the terminal device cannot be determined.

In addition, in some cases, the terminal device may fail to obtain the model suitable for the current scenario timely, so as to impact the performance of the wireless communication system.

For example, the selection of an optimal AI/ML model is required to be based on an accurate monitoring for the operating state of the AI/ML model by the network device. However, constrained by the complexity, inaccuracy and non-real-time nature of model performance monitoring, the network device may fail to detect that the model gets into an operating state with poor performance timely, and may not indicate the terminal device to switch to an AI/ML model that is more suitable for the current scenario timely, resulting in the system performance degradation.

For another example, for a new deployment scenario that the terminal device has never encountered before, even if it is detected that the original AI/ML model is no longer suitable timely, the model repository of the terminal device may not necessarily contain an AI/ML model adapted to the new scenario, and a new model needs to be downloaded from the Internet, or online training needs to be performed on the existing model to adapt to the new scenario. However, this will take some time to achieve, and the performance of the original model may become more degraded before the new model is obtained.

For another example, due to changes in the terminal device's own capabilities (e.g., reduced computing resources, decreased storage space or insufficient power), the terminal device may be unable to continue using the original AI/ML model, but fails to notify the network device to switch to another AI/ML model timely. This leads the network side to have a different understanding on the AI/ML model used by the terminal device, so that an unsuitable AI/ML model is used by the network side and the terminal device, causing the error in transmitting data.

Therefore, when a terminal device is unable to obtain the model information to be used or fails to obtain the model information suitable for a current scenario timely, the performance gains may not be brought and the system performance may even be impacted.

To solve the above problems, the embodiments of the present disclosure provide a method for wireless communication, when the terminal device is unable to determine the model information to be used or fails to obtain the model information suitable for the current scenario timely, for example, when the first condition is met, a model (e.g., the first model) that has good generalization capability and can work in multiple deployment scenarios is used for communication, thereby helping to improve the system performance.

FIG. 5 is a flowchart of a method for wireless communication provided in the embodiments of the present disclosure. The method illustrated in FIG. 5 may include step S510.

In step S510, the terminal device performs communication with a network device based on a first model in response to the first condition being met.

The first condition may include that the terminal device is not configured with or not indicated with model information. The terminal device being not configured with or not indicated with the model information may refer to that the network device is unable to configure or indicate the model information to the terminal device. For example, during the initial access procedure mentioned above, when the terminal device has not established the RRC connection with the network device yet, the network device is unable to configure or indicate the model information to the network device.

As mentioned above, in some cases, the terminal device fails to obtain the model information suitable for the current scenario timely. Therefore, the first condition may include that the first timer expires (also referred to as overtime), to avoid the system performance degradation caused by the terminal device using an inappropriate model.

In some embodiments, the timing duration of the first timer may be set according to the requirement of the system. For example, the timing duration of the first timer may be determined based on the time at which possible performance degradation may occur that the system is capable of tolerating. In a case where the time at which possible performance degradation may occur that the system is capable of tolerating is relatively short, the timing duration of the first timer may be relatively short. In a case where the time at which possible performance degradation may occur that the system is capable of tolerating is relatively long, the timing duration of the first timer may be relatively long. For another example, the timing duration of the first timer may be determined according to the change of the scenario in which the terminal device is located. If the scenario in which the terminal device is located changes rapidly, the terminal device needs to perform model switching for multiple times to adapt to the change of the scenario. If the scenario of the terminal device changes slowly or does not change, the terminal device may not need to perform model switching, or the number of times of model switching may be small. Based on this, as an example, if the scenario in which the terminal device is located changes rapidly, the timing duration of the first timer may be relatively short. If the scenario in which the terminal device is located changes slowly or does not change, the timing duration of the first timer may be relatively long. The change of scenario in which the terminal device is located may refer to, for example, the position change or the communication quality change of the terminal device.

In the embodiments of the present disclosure, a reasonable design for the timing duration of the first timer may balance both the switching frequency of model and the improvement of the system performance.

The first timer is associated with a time when the terminal device performs communication with the network device based on a second model. For example, the operation of the first timer (e.g., starting or suspending) is associated with the time when the terminal device performs communication with the network device based on the second model. As an example, the start time of the first timer is associated with a time at which the terminal device starts to use the second model, or the start time of the first timer is associated with a time at which the terminal device receives indication information (which may be referred to as first indication information) for indicating the terminal device to use the second model. As another example, the suspending time of the first timer may be associated with a time at which the terminal device receives the first indication information.

In some embodiments, the first condition including that the first timer expires may include that the terminal device does not receive indication information related to the model information transmitted by the network device before the first timer expires; alternatively, the first condition may include that the time when the terminal device performs communication with the network device based on the second model exceeds the timing duration of the first timer.

In some embodiments, the first model may be an AI technology-based model, e.g., an AI/ML model. For example, the first model is a model that may operate in various deployment scenarios, or the first model is a model that may operate well in multiple deployment scenarios. For example, the first model is a model that has high reliability and best generalization capability and may operate in various deployment scenarios.

In the embodiments of the present disclosure, for the case where the terminal device is not configured with or not indicated with the model information, the terminal device may perform communication with the network device by using the first model, which helps to obtain better system performance compared to a case of not using a model. In addition, when the first timer expires, the terminal device may perform communication with the network device by using the first model. That is, after using a certain model for a long time, the terminal device may automatically switch to (or is referred to as automatically falling back to) the first model. Since the first model has good generalization performance and may be suitable for multiple deployment scenarios, the action of automatic fallback to the first model described above helps to avoid the system performance degradation caused by either a belated detection of mismatch between the model and the deployment scenario, or a misdetection of the model switching command.

For different first conditions, the first model may be different. In other words, the first model may include multiple models, and for different first conditions, the terminal device may perform communication with the network device based on different models among the multiple models.

For example, the first model may include a first initial model. When the first condition is that the terminal device is not configured with or not indicated with the model information, the terminal device performs communication with the network device based on the first initial model. As such, compared to a case of not using a model, in a case where the deployment scenario of the terminal device fails to be detected or the network device is unable to indicate the terminal device which model to use, the terminal device may perform communication with the network device based on the first initial model, so as to achieve better performance.

For another example, the first model may include a first default model. When the first condition is that the first timer expires, the terminal device performs communication with the network device based on the first default model.

In some embodiments, the terminal device starts the first timer in response to the terminal device receiving the first indication information transmitted by the network device, where the first indication information may be used to indicate the terminal device to perform communication with the network device based on the second model. The second model mentioned here may be a model selected by the network device based on the deployment scenario.

It should be noted that the first indication information being used to indicate the terminal device to perform communication with the network device based on the second model may also refer to that: the first indication information is used to indicate the terminal device to use the second model to process data during communication with the network device.

The first indication information may be carried in radio resource control (RRC) information, downlink control information (DCI) indication information, or media access control control element (MAC CE) control information.

After using the second model for a period of time, the deployment scenario may change; or in other words, the second model and the deployment scenario may mismatch. If the network device does not monitor this situation, the terminal device continues to use the second model, which will cause the system performance degradation. If the network device monitors this situation, but in some cases (e.g., poor channel quality), the signaling from the network device to indicate the terminal device to perform model switching may be erroneously detected, so that the network side and the terminal side will have different understandings on the selected or activated model, resulting in the system performance degradation. Therefore, when the first timer expires, the terminal device may perform communication with the network device by using the first default model, that is, the terminal device may switch from the second model to the first default model, so as to help to avoid the system performance degradation.

If the terminal device receives indication information associated with the model transmitted by the network device during the running of the first timer, the terminal device may adjust the usage policy of the model based on the indication information, or determine the usage occasion of the first default model based on the indication information.

In some embodiments, in response to the terminal device receiving the first indication information transmitted by the network device during the running of the first timer, the terminal device may perform a first operation, and the first operation is associated with use of the first default model.

For example, the first operation may include restarting the first timer, or in other words, the first operation may include resetting the first timer. During the running of the first timer, the terminal device receives the first indication information, that is, the second model matches the deployment scenario, or the second model is suitable for the current scenario in which the terminal device performs communication with the network device. Therefore, restarting the first timer at this time may extend the usage time of the non-first default model (e.g., the second model), thereby reducing unnecessary model switching, and further contributing to obtaining better adaptability between the model and the deployment scenario as well as better model inference performance.

During the running of the first timer, the terminal device may process the data by using the second model (for example, the data is processed by using the second model based on the indication information from the network device). When the first timer expires, the terminal device performs communication with the network device based on the first default model, or in other words, the terminal device switches from the second model to the first default model, which may interrupt the data processing process based on the second model, thereby causing the performance loss.

As a solution for solving the above problems, the first operation may include: the terminal device suspending (also referred to as pausing) the first timer and continuing to perform data processing based on the second model; and the terminal device resuming the running of the first timer when the data processing by the terminal device based on the second model is completed.

As another solution for solving the above problems, the first operation may include: maintaining the running of the first timer; and upon expiry of the first timer, determining the model used by the terminal device according to whether data processing based on the second model is completed. For example, upon the expiry of the first timer, when the data processing based on the second model is completed, the terminal device performs communication with the network device based on the first default model; or when the data processing based on the second model is not completed, the terminal device performs communication with the network device based on the first default model after the data processing based on the second model is completed.

As yet another solution for solving the above problems, the first operation may include extending the timing duration of the first timer by a first duration. That is, the conflict between the expiry of the first timer and the incomplete model-based data processing is avoided through extending the timing duration of the first timer. In some embodiments, the first duration may be a preset duration, or the first duration may be indicated by the network device (or in other words, the first duration may be determined based on the indication information transmitted by the network device). For example, the first duration may be determined based on the RRC configuration information, the DCI indication information, or the MAC CE control information transmitted by the network device.

It should be noted that the above three solutions may be used alone or in combination. For example, the first operation may include: extending the timing duration of the first timer by the first duration and maintaining the running of the first timer; and upon expiry of the first timer, determining the model used by the terminal device according to whether the data processing based on the second model is completed, thereby further improving the system performance. That is, after extending the timing duration of the first timer by the first duration, upon expiry of the first timer, when the data processing based on the second model is completed, the terminal device performs communication with the network device based on the first default model; or when the data processing based on the second model is not completed, the terminal device performs communication with the network device based on the first default model after the data processing based on the second model is completed.

In some embodiments, the first model may be determined based on a first rule, and the first rule may be associated with one or more pieces of the following information: a frequency band accessed by the terminal device; an operator identifier of an operator that provides a service for the terminal device; information of a geographical position where the terminal device is located; or historical usage information of the first model.

Based on one or more of the frequency band accessed by the terminal device, the operator identifier of the operator that provides the service for the terminal device, or the information of the geographical position where the terminal device is located, the deployment scenario of the model may be predicted, so as to determine a suitable first initial model and/or first default model.

In some embodiments, the first model may be determined based on the historical usage information of the first model. The historical usage information of the first model may include a model used by the terminal device when the first condition was met prior to the current moment, such as, the model used by the terminal device when the first condition was met last time. For example, if the historical usage information of the first model includes usage information of multiple models, the first model may be a model that was used most frequently among the multiple models. For another example, the first model may be a model used by the terminal device when the first condition was met last time. Since the deployment scenario when the first condition was met last time may be closest to the current model deployment scenario, using the model used by the terminal device when the first condition was met last time as the first model helps to improve the performance of the model while simplifying the model selection process.

As mentioned above, the first model may include the first initial model and the first default model. In some embodiments, the first initial model may be determined based on historical usage information of the first initial model, and the first default model may be determined based on the historical usage information of the first initial model and/or usage information of the first default model. For example, the first default model may be a model used by the terminal device when the first timer expired last time; alternatively, the first default model may be a model used by the terminal device when the terminal device was not configured with or not indicated with the model information last time.

In some embodiments, information of the first initial model may be carried in system information. For example, the system information may be system information in a physical broadcast channel (PBCH) (e.g., a master information block (MIB)) or system information in a system information block (SIB).

In some embodiments, information of the first default model may be carried in the RRC configuration information.

In some embodiments, the information of the first initial model and/or the information of the first default model may also be carried in information transmitted by other terminal devices. That is, the terminal device may also obtain the information of the first initial model and/or the information of the first default model from other terminal devices, such as, through direct communication between terminal devices. For example, when the terminal device switches from communication with the other terminal devices to, or prepares to switch to, communication with the network device, the terminal device may obtain the information of the first initial model from the other terminal devices.

The first model may be determined based on one or more of the methods described above. In some embodiments, the method of determining the first model based on the first rule among the methods described above has the lowest priority. That is, if the first model may be determined by any other method (which may be simply referred to as other methods described above) other than the method of determining the first model based on the first rule among the methods described above, the first model is not determined based on the first rule; or in other words, if the first model is unable to be determined by the other methods described above, the first model is determined based on the first rule.

As mentioned above, capabilities of different terminal devices may be different, and therefore, models that can be supported by different terminal devices may be different. Similarly, candidate first models that can be supported by different terminal devices may be different. Therefore, in some embodiments, the terminal device may report candidate first models that can be supported by the terminal device to the network device, so that the first model matching the capability of the terminal device may be determined; or in other words, the first model used by the terminal device is determined from the candidate first models supported by the terminal device. The candidate first model mentioned here may be a model that can be used by the terminal device when the first condition is met, or a model supported by the capability of the terminal device.

For example, information of the candidate first models may be included in the capability information reported by the terminal device. As an example, the terminal device may transmit first information to the network device, or the network device may receive the first information transmitted by the terminal device. The first information includes information of models supported by the terminal device, where the models supported by the terminal device include the first model. In some implementations, the first information may be a list of models supported by the terminal device.

In some embodiments, the first model may be a model with a specific identifier among the models supported by the terminal device; or in other words, the first model may be a model with the specific identifier in the first information. For example, a model with an identifier A is a candidate first model supported by the terminal device. For another example, a model with an identifier X may be used as the first initial model of the terminal device; and a model with an identifier Y may be used as the first default model of the terminal device. For another example, a model with an identifier M may be used as either the first initial model of the terminal device or the first default model of the terminal device.

It should be noted that the above identifiers may be used alone or in combination. For example, the identifier X, the identifier Y and the identifier M may be used in combination. For another example, the identifier A may be used alone.

In some embodiments, the terminal device may transmit second information to the network device, or the network device may receive the second information transmitted by the terminal device. The second information may be used to indicate the first model.

In some cases, the model used by the network device needs to be associated with the model used by the terminal device at the same moment (that is, the case of using a two-sided model). For example, when the terminal device performs model compression using channel state information, the network device may perform model decompression using channel state information associated with the channel state information for model compression to achieve correct communication.

In some embodiments, the first model is associated with a third model, where the third model is a model used by the network device under the first condition. That is, when the terminal device uses the first model, the network device may use the third model.

For example, the first model includes the first initial model and/or the first default model, and the third model may include a second initial model and/or a second default model, where the first initial model is associated with the second initial model, and the first default model is associated with the second default model. That is, when the terminal device uses the first initial model, the network device may perform communication using the second initial model associated with the first initial model; or when the terminal device uses the first default model, the network device may perform communication using the second default model associated with the first default model.

The first model being associated with the third model may include that an association relationship is present between the first model and the third model, and the association relationship may be configured by the network device. For example, the association relationship between the first initial model and the second initial model, and/or the association relationship between the first default model and the second default model may be configured by the network device.

In some implementations, the association relationship may be configured through an association relationship of model identifiers (e.g., model IDs) or a model identifier set. For example, the network device may configure an identifier of the second initial model that is associated with an identifier of the first initial model, or the network device may configure an identifier of the second default model that is associated with an identifier of the first default model. As an example, the first initial model and the second initial model may use the same model identifier, for example, the first initial model is model 1 at the terminal device side, and the second initial model is model 1 at the network device side, so as to indicate the association relationship thereof. For another example, the network device may configure a combined identifier for the first initial model and the second initial model, or the network device may configure a combined identifier for the first default model and the second default model.

As mentioned above, in a case where the two-side model is used, the terminal device performs communication with the network device based on the first model in response to the first condition being met, and accordingly, the network device performs communication with the terminal device based on the third model. The above method is described from the perspective of the network device below. It should be understood that the description for the network device side may correspond to the description for the terminal device side. Therefore, for the parts not described in detail, reference may be made to the methods described at the terminal device side.

It should be noted that both the terminal device and the network device may be provided with the first timer, and the first timer mentioned in the present embodiment may refer to the first timer configured by the network device side.

In some embodiments, the third model may include the second initial model. When the first condition is that the terminal device is not configured with or not indicated with the model information, the network device performs communication with the terminal device based on the second initial model. That is, the first initial model is associated with the second initial model, and when the terminal device uses the first initial model, the network device may use the second initial model.

In some embodiments, the third model may include the second default model. When the first condition is that the first timer expires, the network device performs communication with the terminal device based on the second default model. That is, the second default model is associated with the first default model, and when the terminal device uses the first default model, the network device may use the second default model.

In some embodiments, the network device starts the first timer in response to the network device transmitting the first indication information to the terminal device, where the first indication information is used to indicate the terminal device to perform communication with the network device based on the second model.

In some embodiments, the network device performs a first operation in response to the network device transmitting the first indication information to the terminal device during the running of the first timer, where the first operation is associated with use of the second default model.

In some embodiments, the first operation includes restarting the first timer.

In some embodiments, the first operation includes: the network device suspending the first timer; and the network device resuming the running of the first timer when data processing by the terminal device based on the second model is completed.

In some embodiments, the first operation includes: maintaining the running of the first timer; and upon expiry of the first timer: when data processing by the terminal device based on the second model is completed, performing communication with the terminal device based on the second default model, or when data processing by the terminal device based on the second model is not completed, performing communication with the terminal device based on the second default model after the data processing based on the second model is completed .

Since the network device is unable to obtain or fails to accurately obtain the completion time of the data processing based on the second model, for the case of using the two-sided model, the network device may determine an activation occasion of the second default model according to the completion time of the data processing based on a fourth model. The fourth model is associated with the second model. For another example, the network device may determine the completion time of the data processing based on the second model according to the data scheduling situation at the network device side.

In some embodiments, the first operation includes extending a timing duration of the first timer by a first duration. For example, the first duration is a preset duration, or the first duration is indicated by the network device.

It can be seen that the starting or suspending of the first timer at the network device side is associated with the transmitting time of the first indication information, while the starting or suspending of the first timer at the terminal device side is associated with the receiving time of the first indication information. However, a first time delay is present between the time at which the terminal device receives the first indication information and the time at which the network device transmits the first indication information.

The first time delay may cause that the operation of the first timer at the terminal device side is out-of-synchronization with the operation of the first timer at the network device, resulting in inconsistency of the time of performing model switching by the terminal device and the network device. That is, within the range of the first time delay, the model used by the terminal device may not be associated with the model used by the network device, and thus the communication quality may be degraded.

In order to solve the above problems, the model switching occasion of the terminal device and/or the network device may be determined based on the expiry of the first timer and a time correction amount (or referred to as a time interval).

In some embodiments, the terminal device may switch to the first default model upon expiry of the first timer, and the network device may switch to the second default model at a moment offset by a first time correction amount after the expiry of the first timer. Since the time at which the network device transmits the first indication information is earlier than the time at which the terminal device receives the first indication information, the start time and expiry time of the first timer at the network device side are earlier than the start time and expiry time of the first timer at the terminal device side, respectively. Therefore, the network device switches to the second default model at the moment offset by the first time correction amount after the expiry of the first timer, which helps to eliminate the impact of the model switching occasion caused by the first time delay.

In some embodiments, the terminal device may switch to the first default model at a moment offset by a second time correction amount after the expiry of the first timer, and the network device may switch to the second default model at a moment offset by a third time correction amount after the expiry of the first timer, where the third time correction amount is greater than the second time correction amount. In order to further eliminate the impact of the model switching occasion caused by the first time delay, neither the terminal device nor the network device uses the model after the first timer expires.

As mentioned above, if the terminal device performs data processing using the second model during the running of the first timer, the terminal device may suspend the first timer and continue to run the first timer after the data processing by the terminal device based on the second model is completed. Since the terminal device may obtain the time at which it completes the data processing based on the second model, while the network device is unable to obtain or fails to accurately obtain the time at which the terminal device completes the data processing based on the second model, the network device is unable to determine the time to resume the running of the first timer; or in other words, an error is present between the time at which the network device resumes the running of the first timer and the time at which the terminal device resumes the running of the first timer. Therefore, an error is present between the expiry time of the first timer at the network device side and the expiry time of the first timer at the terminal device side.

In order to solve the above problems, the terminal device may transmit second indication information to the network device when the data processing based on the second model is completed. The network device may resume the running of the first timer in response to receiving the second indication information transmitted by the terminal device. As such, a second time delay may be present between the expiry time of the first timer at the network device side and the expiry time of the first timer at the terminal device side. Here, the second time delay is greater than the first time delay, for example, the second time delay is twice the first time delay. Therefore, the terminal device may switch to the first default model upon expiry of the first timer, and the network device may switch to the second default model at a moment offset by a fourth time correction amount after the expiry of the first timer, which helps to improve the accuracy of the model switching occasion. Here, the fourth time correction amount may be greater than the first time correction amount, for example, the fourth time correction amount is twice the first time correction amount.

In some embodiments, the network device may determine the time to resume the running of the first timer based on the data scheduling situation of the network device, which is convenient for implementation.

In some embodiments, the network device may switch to the second default model upon expiry of the first timer, and the terminal device may switch to the first default model at a moment offset by a first time correction amount before the expiry of the first timer. The specific implementation is similar to the method of correcting the occasion of switching the model by the network device mentioned above, which will not be repeated here for brevity.

One or more of the first time correction amount, the second time correction amount, the third time correction amount or the fourth time correction amount may be determined based on a transmission delay between the terminal device and the network device in the current deployment scenario. For example, the terminal device may determine the transmission delay based on the transmitting time carried in the first indication information and the time at which the terminal device receives the first indication information.

One or more of the first time correction amount, the second time correction amount, the third time correction amount or the fourth time correction amount may be pre-configured, or may be dynamically indicated before model switching. For example, the fourth time correction amount may be carried in the second indication information.

It should be noted that certain operations performed by the network device based on the first timer refer to operations performed by the network device based on the first timer at the network device side; and certain operations performed by the terminal device based on the first timer refer to operations performed by the terminal device based on the first timer at the terminal device side.

It should be noted that the first timer may be an incremental timer or a decreasing timer, which is not limited in the present disclosure.

It should be noted that using a certain model or switching to a certain model mentioned in the embodiments of the present disclosure may refer to that the first device performs communication with the second device based on the model, where the first device may be a terminal device or a network device, and the second device may be a terminal device or a network device.

The method provided in the embodiments of the present disclosure is introduced in detail below in combination with Embodiments I to IV by taking the first model being an AI/ML model as an example.

### Embodiment I

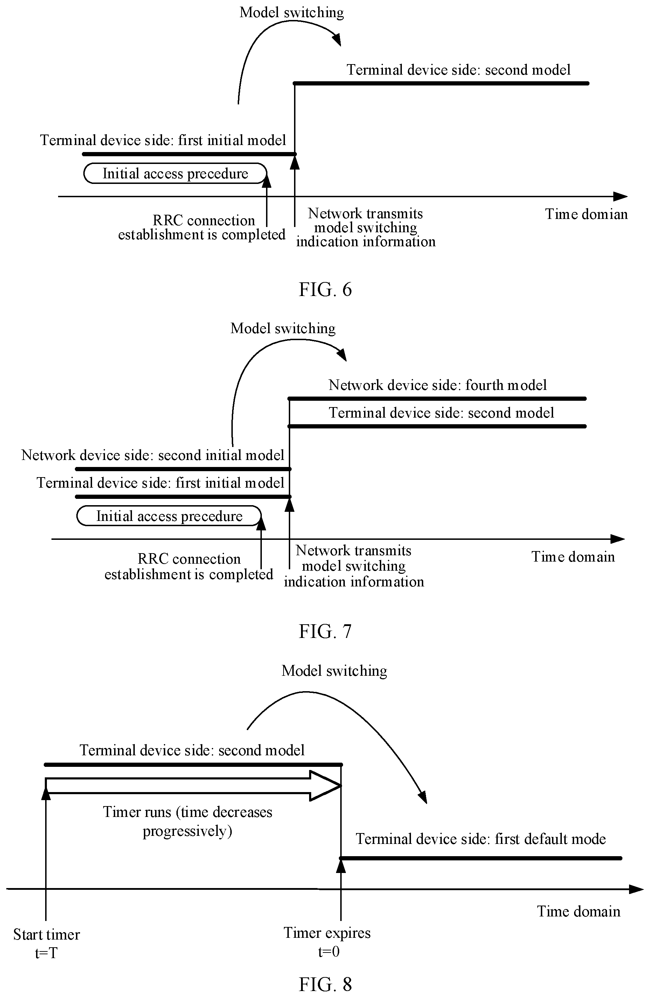

In Embodiment I, by taking an example where an RRC connection is not established between the terminal device and the network device (that is, the first condition is a case where the terminal device is not configured with or not indicated with the model information), the method provided by the embodiment of the present disclosure is introduced with reference to FIG. 6 and FIG. 7.

Referring to FIG. 6, during the initial access procedure, the terminal device has not established the RRC connection yet, and is unable to determine which AI/ML model to use based on the RRC configuration, DCI, MAC CE or the like from the network device side, and also is unable to detect the current deployment scenario, so that it is impossible to determine which model is best adapted to the current deployment scenario. Therefore, an AI/ML model (i.e., the first initial model) that can provide reliable performance, has the best generalization capability and is guaranteed to work in any deployment scenario can be adopted. The ID of the first initial model may be determined according to the first rule or the system information at the network device side.

After the terminal device establishes the RRC connection, the system may detect the deployment environment in which the terminal device is located, so that the AI/ML model (e.g., the second model) that is best adapted to the current deployment environment is selected, or it is switched to another AI/ML model (e.g., the second model) according to the indication information from the network device (the RRC configuration information, the DCI indication information, the MAC CE control information, or the like). As the deployment environment changes subsequently, it may also be switched to other AI/ML models based on the indication information from the network device.

When the network device side and the terminal device side need to use corresponding AI/ML models (for example, using a two-sided model), the initial model at the network device side and the initial model at the terminal device side are also used correspondingly. As illustrated in FIG. 7, during the initial access procedure, the terminal device has not yet established the RRC connection, the terminal device side uses the first initial model, and the network device side also uses the corresponding second initial model. After the terminal device establishes the RRC connection, the network device indicates the terminal device to switch to the second model, and the network device also switches to the fourth model corresponding to the second model at the same time.

In the embodiment of the present disclosure, during the initial access phase where the system is unable to detect the deployment scenario of the terminal device and the network device is unable to indicate which model the terminal device uses, an AI/ML model may be used to achieve better performance than a non-AI/ML model.

### Embodiment II

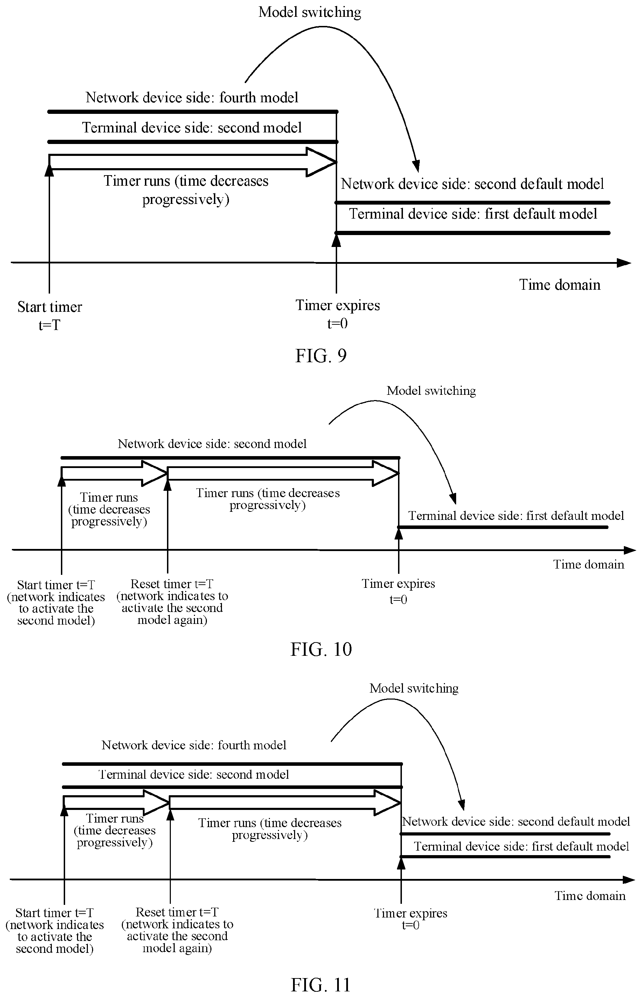

In Embodiment II, by taking an example where the first condition is that the first timer expires, the method provided by the embodiment of the present disclosure is introduced with reference to FIG. 8 and FIG. 9.

Referring to FIG. 8, in the RRC connection state, the terminal device may select the AI/ML model (e.g., the second model) that is best adapted to the deployment scenario according to the indication from the network device side. However, to avoid the inaccuracies and untimeliness in detecting the changes of the deployment scenario and monitoring the running performance of the AI/ML model, a timer (i.e., the first timer mentioned above) shall be started when the terminal device starts to use the second model. For example, the timer is a timer with a duration of T, and the timer starts to count down (decrease progressively) from t=T. Upon the expiry of the first timer (i.e., t=0), the terminal device automatically switches to the first default model.

When the network device side and the terminal device side need to use corresponding AI/ML models (for example, using a two-sided model), the default model at the network device side and the AI/ML model at the terminal device side are also used correspondingly. Referring to FIG. 9, when the terminal device side uses the second model, the network device side also uses the corresponding fourth model. After the timer expires, the terminal device automatically switches to the first default model, and the network device also automatically switches to the second default model.

In the embodiments of the present disclosure, after using a certain AI/ML model that is adapted to a specific deployment scenario for a long time, the system may automatically fall back to a default AI/ML model that has better generalization performance and is adapted to various deployment scenarios, which can avoid the situation where the mismatch between the AI/ML model and the deployment scenario is not detected by the system, or where the network device side and the terminal device side have different understandings on activating the AI/ML model caused by false detection of the signaling indicating the model switching from the network device, so as to cause the system performance degradation. Even if the mismatch between the AI/ML model and the deployment scenario is not detected by the system, or the signaling indicating the model switching from the network device is falsely detected, after the timer expires, both the network device and the terminal device consider that they should fall back to the default AI/ML model, thereby ensuring the reliability of the system performance.

### Embodiment III

In Embodiment III, by taking an example where the first condition is that the first timer expires, the method provided by the embodiment of the present disclosure is introduced with reference to FIG. 10 and FIG. 11.

Referring to FIG. 10, after an AI/ML model (e.g., the second model) that is better adapted to the deployment scenario is activated, the timer should expire after time T, and the model shall fall back to the default model. However, if the network device indicates to activate the second model via the indication information again during the running of the timer, it means that the network device determines that the second model is still suitable for continued use according to the detection of the deployment scenario and the monitoring of the adaptability of the second model to the deployment scenario. Therefore, when the network device indicates to activate the second model again via the indication information, the timer may be reset to t=T, so that the timer restarts timing, and after the timer expires, the terminal device automatically switches to the first default model.

When the network device side and the terminal device side need to use corresponding AI/ML models, the default model at the network device side and the default model at the terminal device side are also used correspondingly. Referring to FIG. 11, after the second model at the terminal device side that is better adapted to the deployment scenario is activated, the network device side also uses the corresponding fourth model. The timer should expire after time T, and upon the expiry of the timer, both the model at the terminal device side and the model at the network device side fall back to the default model. However, if the network device indicates to activate the second model and the fourth model via the indication information again during the running of the timer, it means that the network device determines that the second model and/or the fourth model are still suitable for continued use according to the detection of the deployment scenario and the monitoring of the adaptability of the second model and the fourth model to the deployment scenario. Therefore, when the network device indicates to activate the second model and/or the fourth model again via the indication information, the timer may be reset (or restarted) to t=T, so that the timer restarts timing, and after the timer expires, the terminal device and the network device side automatically switch to the first default model and the second default model, respectively.

In the embodiment of the present disclosure, when the system determines that a certain non-default model is well adapted to the deployment scenario, the system may extend the usage time of the non-default AI/ML model by resetting the AI/ML model fallback timer, thereby reducing unnecessary frequent fallbacks as well as achieving better adaptability to the deployment scenario and better AI/ML model inference performance.

### Embodiment IV

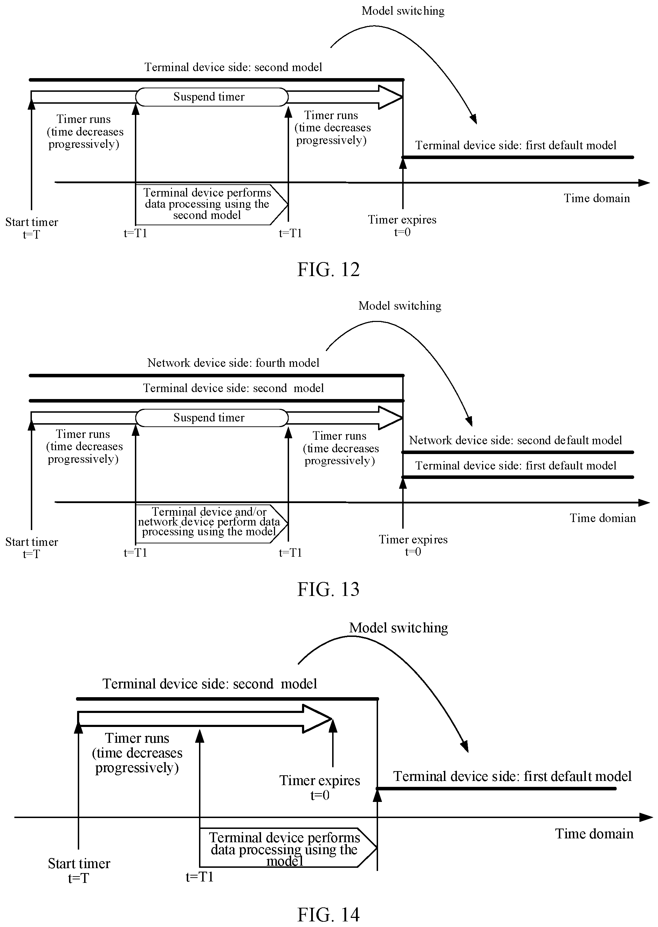

In Embodiment IV, by taking an example where the first condition is that the first timer expires, and the method provided in the embodiment of the present disclosure is introduced with reference to FIG. 12 to FIG. 15.

Selecting and activating an AI/ML model does not mean that the terminal device and the network device always use the model to process data. Upon the expiry of the timer, if neither the terminal device nor the network device uses a non-default AI/ML model to process data, it can immediately fallback to the default AI/ML model. However, if the terminal device and/or network device are using a non-default AI/ML model to process data, the action of immediately falling back to the default AI/ML model will interrupt the data processing process and cause the performance loss. Therefore, when the terminal device and/or network device are using the non-default AI/ML model to process data, the AI/ML model fallback timer may be suspended to postpone the fallback time of the timer.

Referring to FIG. 12, after the second model that is better adapted to the deployment scenario is activated, the timer should expire after time T, and the model should fall back to the default model. However, when the timer countdown reaches t=T1, the terminal device starts to use the second model to process data. In order to avoid the model fallback when the timer countdown reaches t=0 during the data processing process, the timer may be suspended during the process in which the terminal device processes data using the second model, and the running of the timer is resumed from t=T1 after the data processing is completed. After the timer expires, the terminal device automatically switches to the first default model.

When the network device side and the terminal device side need to use corresponding AI/ML models, the default model at the network device side and the default model at the terminal device side are also used correspondingly. Referring to FIG. 13, after the second model at the terminal device side that is better adapted to the deployment scenario is activated, the network device side also uses the corresponding fourth model. The timer should expire after time T, and both the model at the terminal device side and the model at the network device side shall fall back to a default model. However, when the timer countdown reaches t=T1, the network device and/or the terminal device start to use the fourth model and/or the second model to process data. In order to avoid the model fallback when the timer countdown reaches t=0 during the data processing process, the timer may be suspended during the process in which the network device and the terminal device process data using the fourth model and/or the second model, and the running of the timer is resumed from t=T1 after the data processing is completed. After the timer expires, the terminal device and the network device automatically switch to the first default model and the second default model, respectively.

Another solution to avoid the model fallback during the model-based data processing is to postpone the fallback after the timer expires. Referring to FIG. 14, when the timer countdown reaches t=T1, the terminal device starts to use the second model to process data, while the timer is not suspended and runs normally until the timer expires. At this time, if the data processing using the second model has not completed, the terminal device does not fall back to the first default model temporarily, but automatically switch to the first default model after the data processing using the second model is completed. If the data processing using the second model is completed upon the expiry of the timer, the terminal device falls back to the first default model.

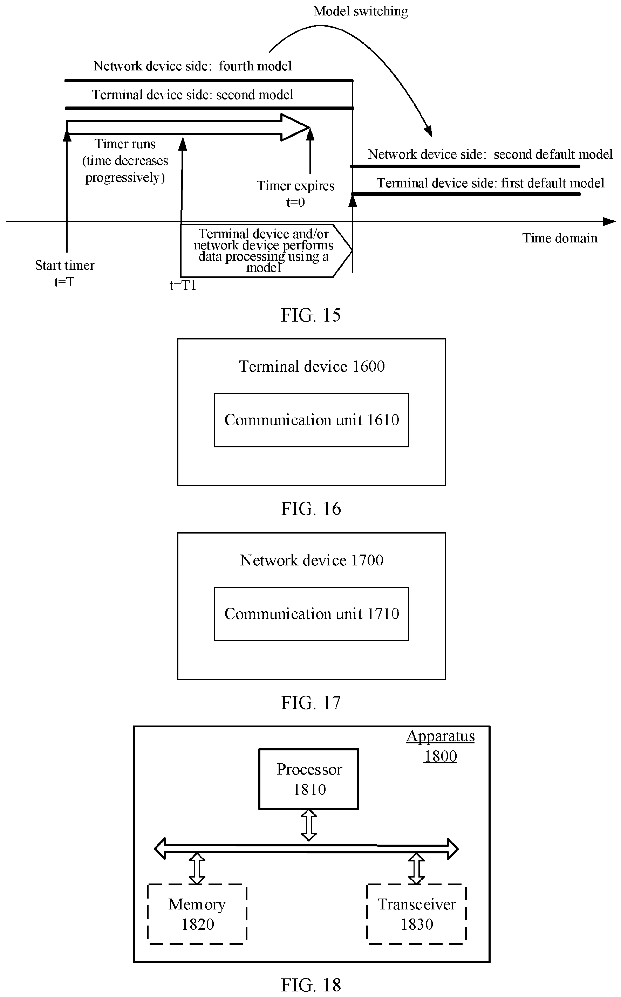

When the network device side and the terminal device side need to use corresponding AI/ML models, the default model at the network device side and the AI/ML model at the terminal device side are also used correspondingly. Referring to FIG. 15, when the timer countdown reaches t=T1, the terminal device and/or the network device side start to use the second model and/or the fourth model to process data, while the timer is not suspended and runs normally until the timer expires. At this time, if the data processing using the second model or the fourth model has not completed, the terminal device and/or network device do not fall back to the default AI/ML model temporarily, but automatically switch to the first default model and the second default model after the data processing using the second model and the fourth model is completed.

In the embodiments of the present disclosure, suspending the timer or postponing the fallback of the timer can prevent the model fallback from interrupting the process of processing data using the AI/ML model, thereby avoiding the performance loss caused by the interruption in the data processing process.

The method embodiments of the present disclosure are described in detail with reference to FIG. 1 to FIG. 15 above, and the apparatus embodiments of the present disclosure are described in detail with reference to FIG. 16 to FIG. 18 below. It should be understood that the description of the method embodiments corresponds to the description of the apparatus embodiments. Therefore, for parts that are not described in detail, reference may be made to the previous method embodiments.

FIG. 16 is a schematic structural diagram of a terminal device according to the embodiments of the present disclosure. As illustrated in FIG. 16, the terminal device 1600 may include a communication unit 1610.

The communication unit 1610 is configured to perform communication with a network device based on a first model in response to a first condition being met, where the first condition includes that the terminal device is not configured with or not indicated with model information, and/or that a first timer expires, and the first timer is associated with a time when the terminal device performs communication with the network device based on a second model.

In some embodiments, the first model includes a first initial model; and when the first condition is that the terminal device is not configured with or not indicated with the model information, the terminal device performs communication with the network device based on the first initial model.

In some embodiments, the first model includes a first default model; and when the first condition is that the first timer expires, the terminal device performs communication with the network device based on the first default model.

In some embodiments, the terminal device further includes: a starting unit, configured to start the first timer in response to the terminal device receiving first indication information transmitted by the network device, where the first indication information is used to indicate the terminal device to perform communication with the network device based on the second model.

In some embodiments, the terminal device further includes: an execution unit, configured to perform a first operation in response to the terminal device receiving the first indication information transmitted by the network device during running of the first timer, where the first operation is associated with use of the first default model.

In some embodiments, the first operation includes restarting the first timer.

In some embodiments, the first operation includes: the terminal device suspending the first timer and continuing to perform data processing based on the second model; and the terminal device resuming the running of the first timer when the data processing by the terminal device based on the second model is completed.

In some embodiments, the first operation includes: maintaining the running of the first timer; and upon expiry of the first timer: when data processing by the terminal device based on the second model is completed, performing communication with the network device based on the first default model; or when data processing by the terminal device based on the second model is not completed, performing communication with the network device based on the first default model after the data processing based on the second model is completed.

In some embodiments, the first operation includes extending a timing duration of the first timer by a first duration.

In some embodiments, the first duration is a preset duration, or the first duration is indicated by the network device.

In some embodiments, the first model is determined based on a first rule, and the first rule is associated with one or more pieces of following information: a frequency band accessed by the terminal device; an operator identifier of an operator that provides a service for the terminal device; information of a geographical position where the terminal device is located; or historical usage information of the first model.

In some embodiments, information of the first initial model is carried in system information or in information transmitted by other terminal devices.

In some embodiments, information of the first default model is carried in radio resource control (RRC) configuration information or in information transmitted by other terminal devices.

In some embodiments, the terminal device further includes: a first transmitting unit, configured to transmit first information to the network device, where the first information includes information of models supported by the terminal device, and the models supported by the terminal device include the first model.

In some embodiments, the first model is a model with a specific identifier among the models supported by the terminal device.

In some embodiments, the device further includes: a second transmitting unit, configured to second information to the network device, where the second information is used to indicate the first model.

In some embodiments, the first model is associated with a third model, and the third model is a model used by the network device under the first condition.

In some embodiments, the first model being associated with the third model includes that an association relationship is present between the first model and the third model, and the association relationship is configured by the network device.

FIG. 17 is a schematic structural diagram of a network device according to the embodiments of the present disclosure. As illustrated in FIG. 17, the network device 1700 may include a communication unit 1710.

The communication unit 1710 is configured to perform communication with a terminal device based on a third model in response to a first condition being met, where the first condition includes that the terminal device is not configured with or not indicated with model information, and/or that a first timer expires; and a first model is associated with the third model, the first model is a model used by the terminal device when the first condition is met, and the first timer is associated with a time when the terminal device performs communication with the network device based on a second model.

In some embodiments, the third model includes a second initial model; and when the first condition is that the terminal device is not configured with or not indicated with the model information, the network device performs communication with the terminal device based on the second initial model.

In some embodiments, the third model includes a second default model; and when the first condition is that the first timer expires, the network device performs communication with the terminal device based on the second default model.

In some embodiments, the network device further includes: a starting unit, configured to start the first timer in response to the network device transmitting first indication information to the terminal device, where the first indication information is used to indicate the terminal device to perform communication with the network device based on the second model.

In some embodiments, the network device further includes: an execution unit, configured to perform a first operation in response to the network device transmitting the first indication information to the terminal device during running of the first timer, where the first operation is associated with used of second default model.

In some embodiments, the first operation includes restarting the first timer.

In some embodiments, the first operation includes: the network device suspending the first timer; and the network device resuming the running of the first timer when the data processing by the terminal device based on the second model is completed.

In some embodiments, the first operation includes: maintaining the running of the first timer; and upon expiry of the first timer: when data processing by the terminal device based on the second model is completed, performing communication with the terminal device based on the second default model; or when data processing by the terminal device based on the second model is not completed, performing communication with the terminal device based on the second default model after the data processing based on the second model is completed.

In some embodiments, the first operation includes extending a timing duration of the first timer by a first duration.

In some embodiments, the first duration is a preset duration, or the first duration is indicated by the network device.

In some embodiments, the first model includes a first initial model, and the first initial model is for use by the terminal device in a case where the first condition is that the terminal device is not configured with or not indicated with the model information.

In some embodiments, the first model includes a first default model, and the first default model is for use by the terminal device in a case where the first condition is that the first timer expires.

In some embodiments, the first model is determined based on a first rule, and the first rule is associated with one or more pieces of following information: a frequency band accessed by the terminal device; an operator identifier of an operator that provides a service for the terminal device; information of a geographical position where the terminal device is located; or historical usage information of the first model.

In some embodiments, information of the first initial model is carried in system information or in information transmitted by other terminal devices.

In some embodiments, information of the first default model is carried in radio resource control (RRC) configuration information or in information transmitted by other terminal devices.

In some embodiments, the network device further includes: a first receiving unit, configured to receive first information transmitted by the terminal device, where the first information includes information of models supported by the terminal device, and the models supported by the terminal device include the first model, the first model being a model used by the terminal device under the first condition.

In some embodiments, the first model is a model with a specific identifier among the models supported by the terminal device.

In some embodiments, the network device further includes: a second receiving unit, configured to receive second information transmitted by the terminal device, where the second information is used to indicate the first model.

In some embodiments, the first model being associated with the third model includes that an association relationship is present between the first model and the third model, and the association relationship is configured by the network device.

In an optional embodiment, the transmitting unit, the receiving unit and the communication unit mentioned above may be a transceiver 1830. The terminal device 1600 and the network device 1700 may further include a processor 1810 and a memory 1820, as specifically illustrated in FIG. 18.

FIG. 18 is a schematic structural diagram of a communication apparatus of the embodiments of the present disclosure. Dashed lines in FIG. 18 indicate that the units or modules are optional. The apparatus 1800 may be configured to implement the methods described in the above method embodiments. The apparatus 1800 may be a chip, a terminal device or a network device.

The apparatus 1800 may include one or more processors 1810. The processor 1810 may support the apparatus 1800 to implement the methods described in the above method embodiments. The processor 1810 may be a general processor or a dedicated processor. For example, the processor may be a central processing unit (CPU). Alternatively, the processor may also be other general processors, a digital signal processor (DSP), an application specific integrated circuit (ASIC), a field programmable gate array (FPGA) or other programmable logic devices, a discrete gate or a transistor logic device, a discrete hardware component. The general processor may be a microprocessor, or the processor may be any conventional processor or the like.

The apparatus 1800 may further include one or more memories 1820. The memory 1820 has a program stored thereon, and the program may be performed by the processor 1810, so that the processor 1810 performs the methods described in the above method embodiments. The memory 1820 may be independent of the processor 1810 or may be integrated into the processor 1810.

The apparatus 1800 may further include a transceiver 1830. The processor 1810 may communicate with other devices or chips via the transceiver 1830. For example, the processor 1810 may transmit and receive data with other devices or chips via the transceiver 1830.

The embodiments of the present disclosure further provide a computer-readable storage medium, configured to store a program. The computer-readable storage medium may be applied to the terminal device or the network device provided in the embodiments of the present disclosure, and the program enables a computer to perform the methods performed by the terminal device or the network device in various embodiments of the present disclosure.

The embodiments of the present disclosure further provide a computer program product. The computer program product includes a program. The computer program product may be applied to the terminal device or the network device provided in the embodiments of the present disclosure, and the program enables a computer to perform the methods performed by the terminal device or the network device in various embodiments of the present disclosure.

The embodiments of the present disclosure further provide a computer program. The computer program may be applied to the terminal device or the network device provided in the embodiments of the present disclosure, and the computer program enables a computer to perform the methods performed by the terminal device or the network device in various embodiments of the present disclosure.

It should be understood that the terms "system" and "network" in the present disclosure may be used interchangeably. Furthermore, the terms used in the present disclosure are only used to explain the specific embodiments of the present disclosure, but are not intended to limit the present disclosure. The terms "first", "second", "third", "fourth" or the like in the specification, claims and drawings of the present disclosure are used to distinguish different objects, rather than to describe a specific order. In addition, the terms "include/comprise" and "has/have" and any variations thereof, are intended to cover the non-exclusive inclusion.

In the embodiments of the present disclosure, the "indicate/indicated/indicating/indication" mentioned may be a direct indication, an indirect indication, or may also indicate that there is an associated relationship. For example, A indicating B may mean that A directly indicates B, for example, B may be obtained by A; alternatively, A indicating B may mean that A indirectly indicates B, for example, A indicates C, and B may be obtained by C; alternatively, A indicating B may mean that there is an associated relationship between A and B.

In the embodiments of the present disclosure, the term "include/comprise" mentioned may mean a direct inclusion or an indirect inclusion. Optionally, the term "include/comprise" mentioned in the embodiments of the present disclosure may be replaced with "indicating" or "for determining". For example, A including B may be replaced with A indicating B, or A being used for determining B.

In the embodiments of the present disclosure, "B corresponding to A" means that B is associated with A, and B may be determined according to A. However, it should also be understood that determining B according to A does not mean determining B based on A only, and B may also be determined based on A and/or other information.

In the embodiments of the present disclosure, the term "correspond/corresponding/correspondence" may indicate that there is a direct correspondence or an indirect correspondence between two items, or may mean that there is an associated relationship between the two items, or may mean a relationship of indicating and being indicated, or a relationship of configuring and being configured, or the like.

In the embodiments of the present disclosure, the "predefined" or "pre-configured" and variations thereof may be implemented by pre-saving corresponding codes, tables or other manners that may be used to indicate related information in the device (for example, including the terminal device and the network device), and the specific implementation manner thereof is not limited in the present disclosure. For example, the predefined may refer to what is defined in a protocol.

In the embodiments of the present disclosure, the term "protocol" may refer to a standard protocol in the field of communications. For example, the "protocol" may include LTE protocols, NR protocols, and related protocols used in a future communication system, which is not limited in the present disclosure.

In the embodiments of the present disclosure, the term "and/or" herein is only an association relationship to describe associated objects, indicating that there may be three kinds of relationships. For example, "A and/or B" may indicate three cases where: A exists alone, both A and B exist, and B exists alone. In addition, a character "/" herein generally indicates that the associated objects before and after this character are in an "or" relationship.

In various embodiments of the present disclosure, magnitude of serial numbers of the above various processes do not mean an execution order, and the execution order of various processes shall be determined by its function and internal logic, and shall not impose any limitation on the implementation process of the embodiments of the present disclosure.

It should be understood that the disclosed systems, apparatuses, and methods in several embodiments provided in the present disclosure may be implemented in other manners. For example, the apparatus embodiments described above are merely exemplary. For example, a division of units is merely a division based on logical functions, while other divisions exist in actual implementations. For example, multiple units or components may be combined or integrated into another system, or some features may be omitted or not performed. On the other hand, the coupling or direct coupling or communicative connection between each other as shown or discussed may be indirect coupling or communicative connection via some interfaces, apparatuses or units, and the connection may be electrical, mechanical, or in other forms.

The units illustrated as separate components may be or may not be physically separated, and the components shown as units may be or may not be physical units. That is, they may be located in one place, or may be distributed onto multiple network units. A part or all of the units may be selected according to actual needs, to implement the purpose of the solutions of the embodiments.

In addition, various function units in the various embodiments of the present disclosure may be integrated into one processing unit, or the various units may exist physically separately, or two or more units may be integrated into one unit.

All or part of the above embodiments may be implemented by software, hardware, firmware or any combination thereof. When implemented by using software, all or part of the embodiments may be implemented in a form of a computer program product. The computer program product includes one or more computer instructions. When the computer program instructions are loaded and executed on a computer, all or part of the procedures or functions described according to the embodiments of the present disclosure are generated. The computer may be a general-purpose computer, a dedicated computer, a computer network, or other programmable apparatus. The computer instructions may be stored in a computer-readable storage medium, or transmitted from a computer-readable storage medium to another computer-readable storage medium. For example, the computer instructions may be transmitted from a website, a computer, a server, or a data center to another website, another computer, another server, or another data center via a wired mode (e.g., a coaxial cable, optical fiber, a digital subscriber line (DSL)) or a wireless mode (e.g., an infrared, radio, microwave, etc.). The computer-readable storage medium may be any available medium that can be read by a computer, or a data storage device including a server or a data center integrated with one or more available media, etc. The available medium may be a magnetic medium (e.g., a floppy disk, a hard disk, or a magnetic tape), an optical medium (e.g., a digital video disc (DVD)), or a semiconductor medium (e.g., a solid state disk (SSD)), etc.

The above content is only specific implementations of the present disclosure, but the protection scope of the present disclosure is not limited thereto. Changes or substitutions that any person skilled in the art could readily conceive of within the technical scope disclosed in the present application shall fall within the protection scope of the present disclosure. Therefore, the protection scope of the present application shall be subject to the protection scope of the claims.

## Claims

1. A method for wireless communication, comprising:
performing, by a terminal device, communication with a network device based on a first model in response to a first condition being met, wherein the first condition comprises that the terminal device is not configured with or not indicated with model information, and/or that a first timer expires, the first timer being associated with a time when the terminal device performs communication with the network device based on a second model.

2. The method according to claim 1, wherein the first model comprises a first initial model; and when the first condition is that the terminal device is not configured with or not indicated with the model information, the terminal device performs communication with the network device based on the first initial model.

3. The method according to claim 1 or 2, wherein the first model comprises a first default model; and when the first condition is that the first timer expires, the terminal device performs communication with the network device based on the first default model.

4. The method according to claim 3, further comprising:
starting, by the terminal device, the first timer in response to the terminal device receiving first indication information transmitted by the network device, wherein the first indication information is used to indicate the terminal device to perform communication with the network device based on the second model.

5. The method according to claim 4, further comprising:
performing, by the terminal device, a first operation in response to the terminal device receiving the first indication information transmitted by the network device during running of the first timer, wherein the first operation is associated with use of the first default model.

6. The method according to claim 5, wherein the first operation comprises restarting the first timer.

7. The method according to claim 5, wherein the first operation comprises:
the terminal device suspending the first timer and continuing to perform data processing based on the second model; and
the terminal device resuming the running of the first timer when the data processing by the terminal device based on the second model is completed.

8. The method according to claim 5, wherein the first operation comprises:
maintaining the running of the first timer; and upon expiry of the first timer:
when data processing by the terminal device based on the second model is completed, performing communication with the network device based on the first default model; or
when data processing by the terminal device based on the second model is not completed, performing communication with the network device based on the first default model after the data processing based on the second model is completed.

9. The method according to claim 5, wherein the first operation comprises extending a timing duration of the first timer by a first duration.

10. The method according to claim 9, wherein the first duration is a preset duration, or the first duration is indicated by the network device.

11. The method according to any one of claims 1 to 10, wherein the first model is determined based on a first rule, and the first rule is associated with one or more pieces of following information:
a frequency band accessed by the terminal device;
an operator identifier of an operator that provides a service for the terminal device;
information of a geographical position where the terminal device is located; or
historical usage information of the first model.

12. The method according to claim 2, wherein information of the first initial model is carried in system information or in information transmitted by other terminal devices.

13. The method according to any one of claims 3 to 10, wherein information of the first default model is carried in radio resource control (RRC) configuration information or in information transmitted by other terminal devices.

14. The method according to any one of claims 1 to 13, further comprising:
transmitting, by the terminal device, first information to the network device, wherein the first information comprises information of models supported by the terminal device, and the models supported by the terminal device comprise the first model.

15. The method according to claim 14, wherein the first model is a model with a specific identifier among the models supported by the terminal device.

16. The method according to claim 14, further comprising:
transmitting, by the terminal device, second information to the network device, wherein the second information is used to indicate the first model.

17. The method according to any one of claims 1 to 16, wherein the first model is associated with a third model, the third model being a model used by the network device under the first condition.

18. The method according to claim 17, wherein the first model being associated with the third model comprises that an association relationship is present between the first model and the third model, and the association relationship is configured by the network device.

19. A method for wireless communication, comprising:
performing, by a network device, communication with a terminal device based on a third model in response to a first condition being met, wherein the first condition comprises that the terminal device is not configured with or not indicated with model information, and/or that a first timer expires;
wherein a first model is associated with the third model, the first model is a model used by the terminal device when the first condition is met, and the first timer is associated with a time when the terminal device performs communication with the network device based on a second model.

20. The method according to claim 19, wherein the third model comprises a second initial model; and when the first condition is that the terminal device is not configured with or not indicated with the model information, the network device performs communication with the terminal device based on the second initial model.

21. The method according to claim 19 or 20, wherein the third model comprises a second default model; and when the first condition is that the first timer expires, the network device performs communication with the terminal device based on the second default model.

22. The method according to claim 21, further comprising:
starting, by the network device, the first timer in response to the network device transmitting first indication information to the terminal device, wherein the first indication information is used to indicate the terminal device to perform communication with the network device based on the second model.

23. The method according to claim 22, further comprising:
performing, by the network device, a first operation in response to the network device transmitting the first indication information to the terminal device during running of the first timer, wherein the first operation is associated with use of the second default model.

24. The method of claim 23, wherein the first operation comprises restarting the first timer.

25. The method according to claim 23, wherein the first operation comprises:
the network device suspending the first timer; and
the network device resuming the running of the first timer when data processing by the terminal device based on the second model is completed.

26. The method according to claim 23, wherein the first operation comprises:
maintaining the running of the first timer; and upon expiry of the first timer:
when data processing by the terminal device based on the second model is completed, performing communication with the terminal device based on the second default model; or
when data processing by the terminal device based on the second model is not completed, performing communication with the terminal device based on the second default model after the data processing based on the second model is completed.

27. The method according to claim 23, wherein the first operation comprises extending a timing duration of the first timer by a first duration.

28. The method according to claim 27, wherein the first duration is a preset duration, or the first duration is indicated by the network device.

29. The method according to claim 19, wherein the first model comprises a first initial model, and the first initial model is for use by the terminal device in a case where the first condition is that the terminal device is not configured with or not indicated with the model information.

30. The method according to claim 19, wherein the first model comprises a first default model, and the first default model is for use by the terminal device in a case where the first condition is that the first timer expires.

31. The method according to claim 29 or 30, wherein the first model is determined based on a first rule, and the first rule is associated with one or more pieces of following information:
a frequency band accessed by the terminal device;
an operator identifier of an operator that provides a service for the terminal device;
information of a geographical position where the terminal device is located; or
historical usage information of the first model.

32. The method according to claim 29, wherein information of the first initial model is carried in system information or in information transmitted by other terminal devices.

33. The method according to claim 30, wherein information of the first default model is carried in radio resource control (RRC) configuration information or in information transmitted by other terminal devices.

34. The method according to any one of claims 19 to 33, further comprising:
receiving, by the network device, first information transmitted by the terminal device, wherein the first information comprises information of models supported by the terminal device, and the models supported by the terminal device comprise the first model, the first model being a model used by the terminal device under the first condition.

35. The method according to claim 34, wherein the first model is a model with a specific identifier among the models supported by the terminal device.

36. The method according to claim 34, further comprising:
receiving, by the network device, second information transmitted by the terminal device, wherein the second information is used to indicate the first model.

37. The method according to any one of claims 34 to 36, wherein the first model being associated with the third model comprises that an association relationship is present between the first model and the third model, and the association relationship is configured by the network device.

38. A terminal device, comprising:
a communication unit, configured to perform communication with a network device based on a first model in response to a first condition being met, wherein the first condition comprises that the terminal device is not configured with or not indicated with model information, and/or that a first timer expires, the first timer being associated with a time when the terminal device performs communication with the network device based on a second model.

39. The device according to claim 38, wherein the first model comprises a first initial model; and when the first condition is that the terminal device is not configured with or not indicated with the model information, the terminal device performs communication with the network device based on the first initial model.

40. The device according to claim 38 or 39, wherein the first model comprises a first default model; and when the first condition is that the first timer expires, the terminal device performs communication with the network device based on the first default model.

41. The device according to claim 40, further comprising:
a starting unit, configured to start the first timer in response to the terminal device receiving first indication information transmitted by the network device, wherein the first indication information is used to indicate the terminal device to perform communication with the network device based on the second model.

42. The device according to claim 41, further comprising:
an execution unit, configured to perform a first operation in response to the terminal device receiving the first indication information transmitted by the network device during running of the first timer, wherein the first operation is associated with use of the first default model.

43. The device of claim 42, wherein the first operation comprises restarting the first timer.

44. The device according to claim 42, wherein the first operation comprises:
the terminal device suspending the first timer and continuing to perform data processing based on the second model; and
the terminal device resuming the running of the first timer when the data processing by the terminal device based on the second model is completed.

45. The device according to claim 42, wherein the first operation comprises:
maintaining the running of the first timer; and upon expiry of the first timer:
when data processing by the terminal device based on the second model is completed, performing communication with the network device based on the first default model; or
when data processing by the terminal device based on the second model is not completed, performing communication with the network device based on the first default model after the data processing based on the second model is completed.

46. The device according to claim 42, wherein the first operation comprises extending a timing duration of the first timer by a first duration.

47. The device according to claim 46, wherein the first duration is a preset duration, or the first duration is indicated by the network device.

48. The apparatus according to any one of claims 38 to 47, wherein the first model is determined based on a first rule, and the first rule is associated with one or more pieces of following information:
a frequency band accessed by the terminal device;
an operator identifier of an operator that provides a service for the terminal device;
information of a geographical position where the terminal device is located; or
historical usage information of the first model.

49. The device according to claim 39, wherein information of the first initial model is carried in system information or in information transmitted by other terminal devices.

50. The device according to any one of claims 40 to 47, wherein information of the first default model is carried in radio resource control (RRC) configuration information or in information transmitted by other terminal devices.

51. The device according to any one of claims 38 to 50, further comprising:
a first transmitting unit, configured to transmit first information to the network device, wherein the first information comprises information of models supported by the terminal device, and the models supported by the terminal device comprise the first model.

52. The device according to claim 51, wherein the first model is a model with a specific identifier among the models supported by the terminal device.

53. The device according to claim 51, further comprising:
a second transmitting unit, configured to transmit second information to the network device, wherein the second information is used to indicate the first model.

54. The device according to any one of claims 38 to 53, wherein the first model is associated with a third model, the third model being a model used by the network device under the first condition.

55. The device according to claim 54, wherein the first model being associated with the third model comprises that an association relationship is present between the first model and the third model, and the association relationship is configured by the network device.

56. A network device, comprising:
a communication unit, configured to perform communication with a terminal device based on a third model in response to a first condition being met, wherein the first condition comprises that the terminal device is not configured with or not indicated with model information, and/or that a first timer expires;
wherein a first model is associated with the third model, the first model is a model used by the terminal device when the first condition is met, and the first timer is associated with a time when the terminal device performs communication with the network device based on a second model.

57. The device according to claim 56, wherein the third model comprises a second initial model; and when the first condition is that the terminal device is not configured with or not indicated with the model information, the network device performs communication with the terminal device based on the second initial model.

58. The device according to claim 56 or 57, wherein the third model comprises a second default model; and when the first condition is that the first timer expires, the network device performs communication with the terminal device based on the second default model.

59. The device according to claim 58, further comprising:
a starting unit, configured to start the first timer in response to the network device transmitting first indication information to the terminal device, wherein the first indication information is used to indicate the terminal device to perform communication with the network device based on the second model.

60. The device according to claim 59, further comprising:
an execution unit, configured to perform a first operation in response to the network device transmitting the first indication information to the terminal device during running of the first timer, wherein the first operation is associated with use of the second default model.

61. The device of claim 60, wherein the first operation comprises restarting the first timer.

62. The device according to claim 60, wherein the first operation comprises:
the network device suspending the first timer; and
the network device resuming the running of the first timer when the data processing by the terminal device based on the second model is completed.

63. The device according to claim 60, wherein the first operation comprises:
maintaining the running of the first timer; and upon expiry of the first timer:
when data processing by the terminal device based on the second model is completed, performing communication with the terminal device based on the second default model; or
when data processing by the terminal device based on the second model is not completed, performing communication with the terminal device based on the second default model after the data processing based on the second model is completed.

64. The device according to claim 60, wherein the first operation comprises extending a timing duration of the first timer by a first duration.

65. The device according to claim 64, wherein the first duration is a preset duration, or the first duration is indicated by the network device.

66. The device according to claim 56, wherein the first model comprises a first initial model, and the first initial model is for use by the terminal device in a case where the first condition is that the terminal device is not configured with or not indicated with the model information.

67. The device according to claim 56, wherein the first model comprises a first default model, and the first default model is for use by the terminal device in a case where the first condition is that the first timer expires.

68. The device according to claim 66 or 67, wherein the first model is determined based on a first rule, and the first rule is associated with one or more pieces of following information:
a frequency band accessed by the terminal device;
an operator identifier of an operator that provides a service for the terminal device;
information of a geographical position where the terminal device is located; or
historical usage information of the first model.

69. The device according to claim 66, wherein information of the first initial model is carried in system information or in information transmitted by other terminal devices.

70. The device according to claim 67, wherein information of the first default model is carried in radio resource control (RRC) configuration information or in information transmitted by other terminal devices.

71. The device according to any one of claims 56 to 70, further comprising:
a first receiving unit, configured to receive first information transmitted by the terminal device, wherein the first information comprises information of models supported by the terminal device, and the models supported by the terminal device comprise the first model, the first model being a model used by the terminal device under the first condition.

72. The device according to claim 71, wherein the first model is a model with a specific identifier among the models supported by the terminal device.

73. The device according to claim 71, further comprising:
a second receiving unit, configured to receive second information transmitted by the terminal device, wherein the second information is used to indicate the first model.

74. The device according to any one of claims 71 to 73, wherein the first model being associated with the third model comprises that an association relationship is present between the first model and the third model, and the association relationship is configured by the network device.

75. A terminal device, comprising: a memory and a processor, wherein the memory is configured to store a program, and the processor is configured to call the program in the memory to enable the terminal device to perform the method according to any one of claims 1 to 18.

76. A network device, comprising: a memory and a processor, wherein the memory is configured to store a program, and the processor is configured to call the program in the memory to enable the network device to perform the method according to any one of claims 19 to 37.

77. An apparatus, comprising: a processor, configured to call a program from a memory to enable the apparatus to perform the method according to any one of claims 1 to 18.

78. An apparatus, comprising: a processor, configured to call a program from a memory to enable the apparatus to perform the method according to any one of claims 19 to 37.

79. A chip, comprising: a processor, configured to call a program from a memory to enable a device equipped with the chip to perform the method according to any one of claims 1 to 18.

80. A chip, comprising: a processor, configured to call a program from a memory to enable a device equipped with the chip to perform the method according to any one of claims 19 to 37.

81. A computer-readable storage medium, having a program stored thereon, wherein the program enables a computer to perform the method according to any one of claims 1 to 18.

82. A computer-readable storage medium, having a program stored thereon, wherein the program enables a computer to perform the method according to any one of claims 19 to 37.

83. A computer program product, comprising: a program, wherein the program enables a computer to perform the method according to any one of claims 1 to 18.

84. A computer program product, comprising: a program, wherein the program enables a computer to perform the method according to any one of claims 19 to 37.

85. A computer program, wherein the computer program enables a computer to perform the method according to any one of claims 1 to 18.

86. A computer program, wherein the computer program enables a computer to perform the method according to any one of claims 19 to 37.
